# EUROPÄISCHE PATENTSCHRIFT

(11) **EP 0 685 146 B1**
(45) Veröffentlichungstag und Bekanntmachung des Hinweises auf die Patenterteilung: **13.06.2001**
(21) Anmeldenummer: 95104295.1
(22) Anmeldetag: 23.03.1995
(51) Int. Cl.: A01D 41/14

(54) **Demontierbarer Erntebergungsvorsatz**
Detachable header
Plate-forme de coupe détachable

(30) Priorität: 08.04.1994 DE 4412116
(43) Veröffentlichungstag der Anmeldung: 06.12.1995
(73) Patentinhaber: DEERE & COMPANY, Moline, Illinois 61265-8098 (US)
(72) Erfinder: Magin, Ludwig, D-67105 Schifferstadt (DE)
(74) Vertreter: Feldmann, Bernhard

(56) Entgegenhaltungen:
- DE-A- 1 482 818
- DE-A- 2 200 509
- FR-A- 2 082 257
- FR-A- 2 212 087
- US-A- 4 714 273

## Beschreibung

Die Erfindung betrifft eine Kombination aus einer Erntemaschine, einem demontierbaren Erntebergungsvorsatz und einem Transport wagen nach dem Oberbegriff des Patentanspruchs 1.

Erntemaschinen, z. B. Mähdrescher oder Feldhäcksler werden zum Erbringen hoher Leistungen mit Erntebergungsvorrichtungen in der Art von Schneidwerken, Maisgebissen, Maispflückern, Pick-Ups und dergleichen ausgerüstet, deren Breite bis zu 7,60 Meter beträgt und die somit zur Fahrt auf öffentlichen Straßen demontiert werden müssen; in aller Regel werden sie auf einen Transportwagen abgelegt und hinter der Erntemaschine hergezogen. Hierzu muß die Bedienungsperson den Erntebergungsvorsatz auf den Transportwagen ablegen, von der Erntemaschine alle Antriebsverbindungen lösen und anschließend den Transportwagen an die Rückseite der Erntemaschine anhängen.

Die DE-AS-1 482 818 offenbart einen Erntebergungsvorsatz, der mittels Schnellkuppelelementen an einen Mähdrescher anschließbar und zum Betrieb über eine Gelenkwelle oder einen Motor antreibbar ist. Die Bedienung der verschiedenen Hydraulikkomponenten eines in sich geschlossenen Hydrauliksystems auf dem Schneidwerk, also der Haspelhöhe und der Haspelhorizontalverstellung, erfolgt über einen Arm mit Bedienungselementen, der schwenkbar an dem Schneidwerk gelagert ist und in die Griffnähe des Fahrerstandes verschwenkt werden kann.

Dieser Erntebergungsvorsatz ist insofern nachteilig, als zum Anschluß der Gelenkwelle, zum Betätigen der Schnellkuppelelemente und zum Schwenken des Arms mit den Bedienungselementen die Bedienungsperson den Fahrerstand verlassen muß. Der dort vorgesehene Arm mit Bedienungselementen ist bei heute gebräuchlichen Erntemaschinen nicht mehr brauchbar, weil diese nahezu ausschließlich mit einer den Fahrerstand vollkommen abschließenden Kabine versehen sind.

Wird das Schneidwerk auf einen nicht gezeigten, aber z. B. aus der DE-OS-17 82 873 bekannten Transportwagen aufgelegt, ist es zum Fahren auf öffentlichen Straßen wiederum erforderlich, daß die Bedienungsperson die Beleuchtungsaggregate des Transportwagens an den Mähdrescher anschließt und die Stütze in eine Transportstellung verstellt.

Die der Erfindung zugrunde liegende Aufgabe wird darin gesehen, einen demontierbaren Erntebergungsvorsatz vorzuschlagen, der von der Erntemaschine getrennt bzw. an diese angeschlossen werden kann, ohne daß eine Bedienungsperson den Fahrerstand verläßt. Dieser Erntebergungsvorsatz soll weiterhin mittels eines Transportwagens befördert werden können, ohne daß zur Benutzung des Transportwagens die Bedienungsperson den Fahrerstand verlassen müßte.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise ist es nicht mehr erforderlich, den Erntebergungsvorsatz über das Hydrauliksystem der Erntemaschine zu betreiben, sondern es reicht aus, wenn die Hydraulikpumpe von der Erntemaschine aus angetrieben wird. Die Steuerung des Druckmittelflusses in dem Hydraulikkreislauf erfolgt über Funksignalen, die von einem Sender auf der Erntemaschine zu einem Empfänger auf dem Erntebergungsvorsatz gesendet werden und dort Elektromagnetventile betätigen; dies kann durch direkten Funkkontakt mit den Elektromagnetventilen oder über ein Verteilsegment erfolgen. Die selbsttätige Schnellkuppelverbindung zwischen dem Erntebergungsvorsatz und der Erntemaschine zum Antreiben der Hydraulikpumpe hat den Vorteil, daß das Anschließen einer Gelenkwelle oder dergleichen Antriebselemente ausbleibt.

Eine Bauart einer Schnellkuppelverbindung besteht in einer verschiebbaren Welle oder Muffe, jeweils mit einem Vielzahnprofil, die mittels eines Stellmotors axial verschiebbar sind, um mit der jeweils anderen eine formschlüssige Verbindung zu erzielen.

Nach einer anderen Bauart ist ein Zugmittelgetriebe an dem Erntebergungsvorsatz vorgesehen, dessen eines Trum auf seiner Außenseite an ein Antriebsrad der Erntemaschine anlegbar und somit antreibbar ist.

Um während des Betriebs den Erntebergungsvorsatz sicher mit der Erntemaschine zu verbinden, ist eine Ver- bzw. Entriegelungsvorrichtung vorgesehen, die z. B. mit Fanghaken oder Bolzen formschlüssig angreift und den Erntebergungsvorsatz unverlierbar hält. Mittels eines fernsteuerbaren Motors, z. B. eines Elektromotors, kann die Ver- bzw. Entriegelungsvorrichtung in eine entriegelnde Stellung gebracht werden und somit den Erntebergungsvorsatz freigeben. Ein Einrücken unter Federwirkung erfolgt auch unter einem Sicherheitsaspekt, da bei Energieausfall an dem Elektromotor die Verriegelung erhalten bleibt. Daneben ist nur ein einfach wirkender Stellmotor erforderlich.

Damit die Bedienungsperson auch dann nicht die Erntemaschine verlassen muß, wenn der Erntebergungsvorsatz auf einen Transportwagen aufgelegt und hinter der Erntemaschine hergezogen werden soll, wird in weiterer Ausgestaltung der Erfindung vorgeschlagen, daß ein in sich geschlossenes, elektrisches und drahtlos fernsteuerbares Energiesystem auf dem Transportwagen zum Bedienen von Beleuchtungs- und Stellmitteln vorgesehen ist, das seitens der Erntemaschine gespeist und seitens des Transportwagens gesteuert wird. Auf diese Weise ist es nicht erforderlich, eine vielpolige Steckkupplung zwischen der Erntemaschine und dem Transportwagen vorzusehen, die zusätzlich zu dem Ankuppelvorgang der Deichsel des Transportwagens geschlossen wird. Vielmehr reicht es aus, eine Stromzuführung und eine Masseverbindung herzustellen, während die Verteilung des Stroms auf die jeweiligen Verbraucher auf seiten des Transportwagens, z. B. mittels Relais' vorgenommen wird. Zum Herstellen einer Verbindung zweier Leitungen können großflächige Kontaktflächen verwendet werden, an denen Kontaktstifte in allen Stellungen des Transportwagens gegenüber der Erntemaschine sicher in Anlage bleiben. Die ebenfalls vorgesehene automatische Anhängekupplung auf der Seite der Erntemaschine schließt normalerweise unter Federkraft, sobald die Zugöse der Deichsel die richtige Lage in dem Zugmaul an der Erntemaschine eingenommen hat. Zum Öffnen der Anhängekupplung beim Abhängen des Transportwagens kann ein Bowdenzug oder ein Stellmotor verwendet werden.

Um auch das Herstellen der beiden Leitungsverbindungen zum Betreiben der Beleuchtung, der Blinker und evtl. Stellmittel auf dem Transportwagen, z. B. für eine Abstellstütze oder Halter zum Festlegen des Erntebergungsvorsatzes auf dem Transportwagen zu vermeiden, kann auf dem Transportwagen ein Akkumulator vorgesehen werden, der entweder über einen Generator durch Antrieb über die Räder oder über einen Sonnenkollektor gespeist wird. Insbesondere die Verwendung eines Sonnenkollektors ist sehr sinnvoll, weil dann, wenn der Erntebergungsvorsatz in Betrieb ist, nahezu ausschließlich sonniges Wetter herrscht, so daß das Aufladen des Akkumulators gewährleistet ist.

Um selbst dann ein Absteigen der Bedienungsperson von der Fahrerplattform zu vermeiden, wenn der Erntebergungsvorsatz in der Form eines Schneidwerks ausgebildet ist und Halmteiler aufweist, wird vorgeschlagen, die Halmteiler über Stellmotoren verschwenkbar an dem Erntebergungsvorsatz anzubringen, über die sie hinter seine Außenumrisse schwenkbar sind. Zwar sind schwenkbare Halmteiler an sich bekannt; doch fehlen dort jegliche Stellmotoren zum Einschwenken der Halmteiler. Bei anderen Arten von Erntebergungsvorsätzen können andere bzw. weitere Stellmittel vorgesehen werden, mit denen z. B. Teilerspitzen eines Maisgebisses eingeklappt werden können. Auf diese Weise wird gewährleistet, daß auch nach dem Auflegen des Erntebergungsvorsatzes auf den Transportwagen die vorgeschriebenen Höchstmaße für den Transport auf der Straße nicht überschritten werden.

Der Ankuppelvorgang des Transportwagens an die Erntemaschine wird erleichtert, wenn eine Ortungs- oder Anzeigevorrichtung zur Angabe der relativen Stellung der Erntemaschine zu dem Transportwagen während eines Ankuppelvorgangs vorgesehen ist. Für eine derartige Vorrichtung kann ein Spiegel, eine Kamera mit Wiedergabe in der Fahrerkabine, ein Piepsmelder mit zunehmender Lautstärke, je näher die Zugöse zum Zugmaul gelangt, und dergleichen verwendet werden.

Eine Abstellstütze an dem Transportwagen und die damit verbundene Stellvorrichtung können eingespart werden, wenn der Transportwagen eine Tandemachse enthält und somit gegen ein Kippen gesichert ist.

In der Zeichnung ist ein nachfolgend näher beschriebenes Ausführungsbeispiel der Erfindung dargestellt. Es zeigt:
- Fig. 1: ein Einzugsgehäuse einer Erntemaschine mit einem Antrieb für einen Erntebergungsvorsatz in Seitenansicht,
- Fig. 2: eine fernbetätigbare Ver- bzw. Entriegelungsvorrichtung in Draufsicht und
- Fig. 3: ein in sich geschlossenes Hydrauliksystem auf dem Erntebergungsvorsatz in schematischer Darstellung,
- Fig. 4: einen Transportwagen in Seitenansicht zur Aufnahme des Erntebergungsvorsatzes.

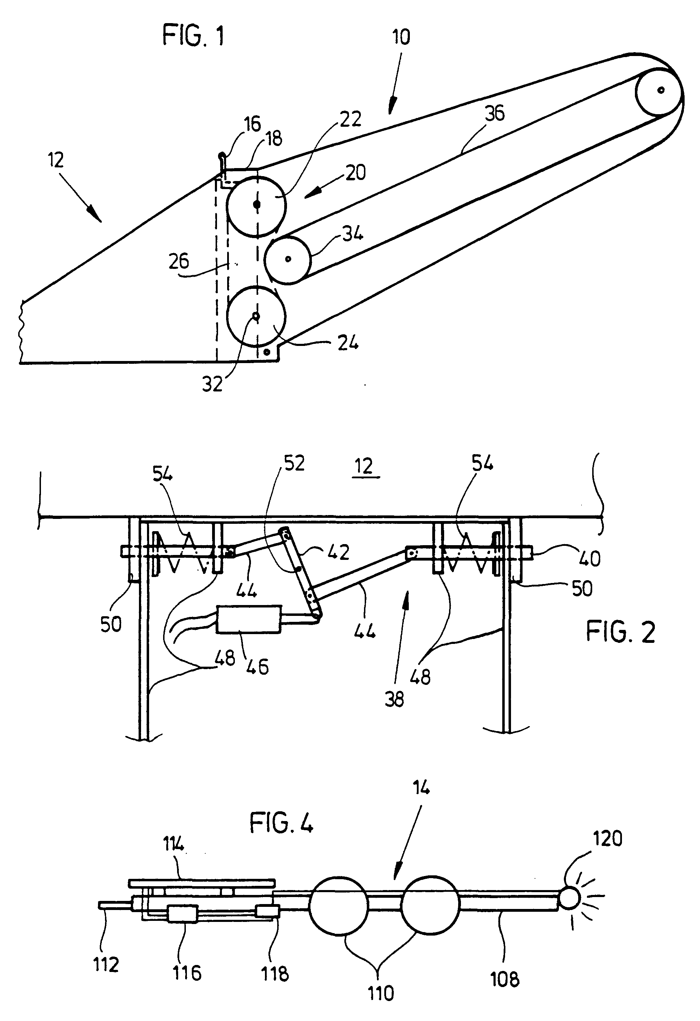

Von einer im übrigen nicht gezeigten Erntemaschine ist in Figur 1 ein Einzugsgehäuse 10 zu sehen, an dessen frontseitigem Ende ein Erntebergungsvorsatz 12 demontierbar aufgenommen ist.

Bei der Erntemaschine kann es sich um einen Mähdrescher, einen Feldhäcksler, einen Schwadmäher oder dergleichen selbstfahrende Erntemaschine handeln.

Dementsprechend ist das Einzugsgehäuse 10 als Schrägförderer, Einzugskanal, Abgabeschacht oder dergleichen ausgebildet. Aber in allen Fällen dient das Einzugsgehäuse 10 dem lösbaren und höhenbeweglichen Anschluß des Erntebergungsvorsatzes 12 an die Erntemaschine.

Je nach der Art der Erntemaschine kann der Erntebergungsvorsatz 12 als Schneidwerk, Maispflücker, Maisgebiß, Pick-Up oder dergleichen ausgebildet sein. Dieser Erntebergungsvorsatz 12 ist in der Regel so breit, daß er bei der Fahrt auf öffentlichen Straßen nicht an der Erntemaschine verbleiben darf; er wird deshalb entweder auf dem gerade geernteten Feld abgelegt, oder mittels eines Transportfahrzeugs befördert oder auf einen in Figur 4 gezeigten Transportwagen 14 aufgelegt und hinter der Erntemaschine bis zum nächsten Einsatz- oder Stillstandsort hergezogen.

Zur Verbindung des Erntebergungsvorsatzes 12 mit dem Einzugsgehäuse 10 sind an der Vorderseite des Einzugsgehäuses 10 in dessen oberen Bereich Haken 16 angebracht und so - auf bekannte Weise - angeordnet und ausgebildet, daß sie einen Querholm 18 des Erntebergungsvorsatzes 12 untergreifen und halten. In dieser Stellung kommt der Erntebergungsvorsatz 12 mit seiner Rückseite an der Vorderseite des Einzugsgehäuses 10 zur Anlage, so daß von ersterem aufgenommenes Erntegut reibungslos ins zweitere befördert werden kann; insofern handelt es sich um eine herkömmliche Anordnung und Ausbildung.

Seitlich des Einzugsgehäuses 10 ist im rückwärtigen Bereich des Erntebergungsvorsatzes 12 ein Umschlingungsgetriebe 20 vorgesehen, das sich aus einem oberen Rad 22, einem unteren Rad 24 und einem Zugmittel 26, insbesondere in der Art einer Kette, zusammensetzt. Das obere Rad 22 ist drehfest auf eine obere Welle 28 für den Antrieb einer Hydraulikpumpe 30 und das untere Rad 24 drehfest auf eine Welle 32 für einen mechanischen Antrieb aufgesetzt. Das Zugmittel 26 kann mittels einer nicht gezeigten Spannrolle unter Spannung gehalten werden.

An dem Einzugsgehäuse 10 ist ein Antriebsrad 34 vorgesehen, das in dem vorliegenden Ausführungsbeispiel über ein weiteres Zugmittel 36 angetrieben wird und an der Außenseite des sich zwischen beiden Rädern 22, 24 erstreckenden und dem Einzugsgehäuse 10 zugelegenen Trums des Zugmittels 26 zur Anlage kommt. Das weitere Zugmittel 36 wird von der Erntemaschine selbst auf nicht gezeigte, aber bekannte Weise angetrieben. Der Angriff bzw. Eingriff des Antriebsrads 34 an bzw. in dem Zugmittel 26 ist derart, daß eine zuverlässige Antriebsübertragung gewährleistet ist und das Zugmittel 26 möglicherweise seitlich ausgelenkt wird, um einen größeren Umschlingungswinkel zu erzielen. Die Spannung des Zugmittels 26 erfolgt durch die Anlage des Antriebsrades 34 beim Anhängen des Erntebergungsvorsatzes 12, insbesondere dann, wenn sich dieser auf das Einzugsgehäuse 10 zubewegt.

Zur Verbindung des Einzugsgehäuses 10 mit dem Erntebergungsvorsatz 12 ist eine Haltevorrichtung 38 vorgesehen, die in Figur 2 dargestellt ist. Diese Haltevorrichtung 38 besteht aus zwei Bolzen 40, einem Schwenkhebel 42, zwei Verbindungsstangen 44 und einem Stellmotor 46.

Die Bolzen 40 sind jeweils in nicht näher gezeigten, miteinander fluchtenden Öffnungen in Wänden 48 im unteren vorderen Bereich des Einzugsgehäuses 10 längsbeweglich gelagert. Die Bolzen 40 können in einer Verriegelungsstellung zudem in eine weitere Öffnung in einer Lasche 50 an der Rückseite des Erntebergungsvorsatzes 12 eingeschoben werden und stellen damit eine formschlüssige Verbindung zwischen dem Einzugsgehäuse 10 und dem Erntebergungsvorsatz 12 her.

Der Schwenkhebel 42 ist um eine mittige Achse 52 zwischen zwei Endstellungen schwenkbar und an beiden Endabschnitten gelenkig mit jeweils einer der Verbindungsstangen 44 verbunden; an einem der Endabschnitte greift zudem der Stellmotor 46 ebenfalls gelenkig an.

Die Verbindungsstangen 44 greifen einerseits an dem den Laschen 50 abgelegenen Ende der Bolzen 40 und andererseits an dem Schwenkhebel 42 an. Die Ausrichtung der Längsachsen der Bolzen 40 und des Schwenkhebels 42 ist so getroffen, daß sie im wesentlichen rechtwinklig zueinander verlaufen, wenn die Bolzen 40 unter der Wirkung jeweils einer Feder 54 nach außen geschoben worden sind, um mit den Laschen 50 in Eingriff zu gelangen.

Der Stellmotor 46 ist in diesem Ausführungsbeispiel als ein einfachwirkender Elektromotor ausgebildet und ist so angeordnet, daß er den Schwenkhebel 42 mit Blick auf Figur 2 im Uhrzeigerdrehsinn verschwenken kann, während die Schwenkbewegung entgegen dem Uhrzeigerdrehsinn von den Federn 54 bewirkt wird, die sich z. B. über Stifte oder Scheiben an den Bolzen 40 abstützen. Hierzu wird der Stellmotor 46 stromlos gemacht oder ausgekuppelt, so daß die Federn 54 dessen innere Reibung überwinden und den Schwenkhebel 42 bewegen können.

Demnach werden die Bolzen 40 aus ihrer verriegelnden Stellung entfernt, d. h. herausgezogen, wenn an den Stellmotor 46 über einen nicht gezeigten Schalter oder Kreis Strom angelegt wird. Mittels dieses Stellmotors 46 und der Federn kann also der Erntebergungsvorsatz 12 ferngesteuert an- und abgekuppelt werden.

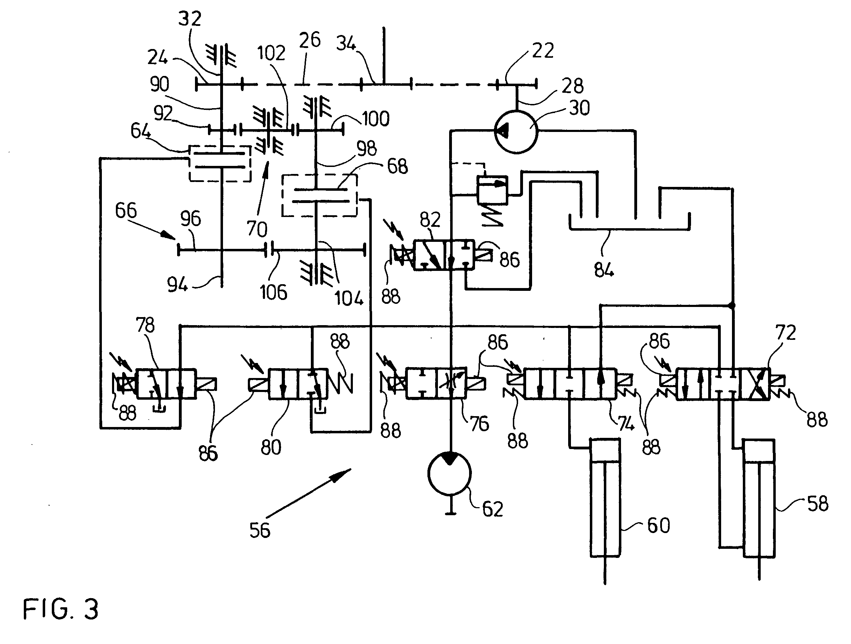

Auf dem Erntebergungsvorsatz 12 befindet sich ein in sich geschlossenes Hydrauliksystem 56, dessen Aufbau mit dem mechanischen Antrieb in Figur 3 dargestellt ist.

Das Hydrauliksystem 56 enthält die Hydraulikpumpe 30, einen doppeltwirkenden Hydraulikzylinder 58 für eine Haspelhorizontalverstellung, einen einfachwirkenden Hydraulikzylinder 60 für eine Haspelhöhenverstellung, einen Hydraulikmotor 62 für den Haspelantrieb, eine Hydraulikkupplung 64 für einen Hauptantrieb 66 und eine Hydraulikkupplung 68 für einen Reversierantrieb 70. Darüber hinaus ist dem Hydraulikzylinder 58 ein 3/2-Wegeventil 72, dem Hydraulikzylinder 60 ein 3/1-Wegeventil 74, dem Hydraulikmotor 62 ein 2/1-Wegeventil 76, der Hydraulikkupplung 64 ein 2/1-Wegeventil 78 und der Hydraulikkupplung 68 ein 2/1-Wegeventil 80 vorgeschaltet, deren Druckeingänge sämtlich über ein 2/1-Wegeventil 82 an die Hydraulikpumpe 30 angelegt sind und deren Ausgänge jeweils mit den genannten Verbrauchern oder einem Vorratsbehälter 84 in Ver-bindung stehen.

Jedes der Wegeventile 72 bis 82 ist in diesem Ausführungsbeispiel mit einem funksteuerbaren Elektromagneten 86 je Durchgangsstellung und einer oder zwei Federn 88 zum Bewegen des Wegeventils 72 bis 82 in seine einen Durchgang sperrende Stellung versehen, mit deren Hilfe jedes Wegeventil 72 bis 82 aus einer grundsätzlich für den Ruhezustand vorgegebenen Sperrstellung in eine Durchgangsstellung verschiebbar ist.

Nach einer anderen Ausbildungsform können die Elektromagnete 86 anstatt funkgesteuert über nicht gezeigte Leitungen betätigt werden, wobei entweder jede der Leitungen über entsprechende Kontakte an einer Kontaktplatte an der Rückseite des Erntebergungsvorsatzes 12 mit Kontakten an einer entsprechenden Gegenkontaktplatte an dem Einzugsgehäuse 10 in Verbindung bringbar ist. Oder es wird auf dem Erntebergungsvorsatz 12 eine Steuereinheit vorgesehen, zu der einerseits alle Leitungen für die Elektromagneten 86 und andererseits wenigstens eine Stromzufuhr- und eine Masseleitung führen. Je nach der Ausbildung der Steuereinheit kann diese die Stromzufuhr über Funksteuerung oder über eine dritte Leitung mit einer Multiplexsteuerung auf die jeweils betroffenen Elektromagnete 86 verteilen. Schließlich kann eine Multiplexsteuerung auch direkt an den Elektromagneten 86 angewandt werden.

Der Hauptantrieb 66 enthält eine Eingangswelle 90, auf der das Rad 24 und ein Reversierrad 92 drehfest befestigt sind und die endseitig in die Hydraulikkupplung 64 mündet. Ausgangsseitig dieser Hydraulikkupplung schließt eine Welle 94 mit einem Abtriebsrad 96 an. Wenn die Hydraulikkupplung 64 geschlossen ist, nimmt die Eingangswelle 90 die Welle 94 in Vorwärtsdrehrichtung mit, die dann den Antrieb auf die Hauptkomponenten des Erntebergungsvorsatzes 12, nämlich ein Messer und eine Einzugsschnecke übertragen.

Der Reversierantrieb 70 enthält eine achsparallel zu der Eingangswelle 90 verlaufende Nebenwelle 98 mit einem drehfest darauf befestigten Nebenrad 100, die in die Hydraulikkupplung 68 mündet. Zwischen dem Nebenrad 100 und dem Reversierrad 92 ist ein Umkehrrad 102 drehbar und mit diesen ständig kämmend gelagert. Ausgangsseitig der Hydraulikkupplung 68 schließt eine Welle 104 mit einem drehfest darauf angeordneten Rad 106 an. Wird die Hydraulikkupplung 68 geschlossen, erfolgt der Antrieb von dem Rad 24 über die Eingangswelle 90, das Reversierrad 92, das Umkehrrad 102, das Nebenrad 100, die Nebenwelle 98, die Hydraulikkupplung 68, die Welle 104, das Rad 106, das Abtriebsrad 96 und die Welle 94 zu dem Antrieb des Messers und der Einzugsschnecke des Erntebergungsvorsatzes 12 in Rückwärtsrichtung.

Anstatt der Hydraulikkupplungen 64, 68 und des Haupt- und Reversierantriebs 66 und 70 könnte auch ein hydraulischer Antrieb mit einem in zwei Richtungen antreibbaren Hydraulikmotor vorgesehen werden.

Für den Fall, daß der Erntebergungsvorsatz 12 mit schwenkbaren Halmteilern oder Teilerspitzen versehen ist, die mittels elektrischer oder hydraulischer Motoren verstellt werden, sind analog der vorbeschriebenen Weise weitere Anschlüsse, Leitungen, Ventile und Motoren vorzusehen.

Nach alledem läßt sich die Funktion des Hydrauliksystems 56 und des Antriebs des Erntebergungsvorsatzes 12 wie folgt beschreiben.

Sobald über das Zugmittel 36 das Antriebsrad 34 in Drehung versetzt wird, nimmt dieses das Zugmittel 26 antriebsmäßig mit und dreht somit das obere und das untere Rad 22, 24. Aufgrund der Drehung des oberen und unteren Rades 22, 24 wird sowohl die Hydraulikpumpe 30 als auch die Eingangswelle 90 und über das Umkehrrad 102 die Nebenwelle 98 in Drehung versetzt. Im unbetätigten Zustand nehmen alle Wegeventile 72 bis 80 ihre Sperrstellung ein, während das 2/1-Wegeventil 82 eine Verbindung zum Vorratsbehälter 84 herstellt; folglich werden weder die Hydraulikzylinder 58, 60, noch der Hydraulikmotor 62 noch die Hydraulikkupplungen 64, 68 betätigt, und ein Antrieb findet nicht statt. Um einen Antrieb auf irgendeine der Komponenten einzuleiten, ist das 2/1-Wegeventil 82 zu schließen und das betreffende Wegeventil 72 - 80 in seine Durchgangsstellung zu bringen.

In einer hard- oder softwaremäßig angelegten Verknüpfung können bzw. müssen bestimmte Schaltlogiken vorgesehen werden, z. B. daß nur eine der beiden Hydraulikkupplungen 64, 68 geschlossen sein darf, daß bei geschlossener Hydraulikkupplung 64 oder 68 der Hydraulikmotor 62 für den Haspelantrieb in Betrieb ist und dergleichen mehr. In der Zuleitung zu dem Hydraulikmotor 62, insbesondere in dem 2/1-Wegeventil 76, kann eine fernsteuerbar verstellbare Drossel oder Blende vorgesehen werden, mit der die Drehzahl der Haspel oder von Pflückwalzen bei einem als Maispflücker ausgebildeten Erntebergungsvorsatz 12 geregelt werden kann.

Dieses Hydrauliksystem 56 stellt einschließlich des Vorratsbehälters 84 ein geschlossenes System dar, das mit all seinen Komponenten auf dem Erntebergungsvorsatz 12 angeordnet ist und zu seinem Betrieb nur des Anschlusses an das Antriebsrad 34 und der Funksteuerung oder der nicht gezeigten Kontaktplatten zwischen dem Erntebergungsvorsatz 12 und dem Einzugsgehäuse 10 bedarf.

Selbstverständlich kann das Hydrauliksystem 56 auch anders aufgebaut werden und zusätzliche Komponenten, wie Ölkühler, Druckausgleichsbehälter, Druckbegrenzungsventil und dergl. mehr enthalten.

Figur 4 zeigt den Transportwagen 14, auf den der Erntebergungsvorsatz 12 aufgelegt und hinter der Erntemaschine für den Transport hergezogen werden kann. Dieser Transportwagen 14 ist in diesem Ausführungsbeispiel ebenfalls mit einem in sich geschlossenen Energiesystem versehen, das dessen Betrieb von der Fahrerkabine der Erntemaschine aus erlaubt, ohne daß eine Bedienungsperson eine Verbindung zwischen dem Transportwagen 14 und der Erntemaschine herstellen müßte.

Der Transportwagen 14 enthält einen Rahmen 108, der sich über eine Tandemachse 110 fahrbar auf dem Boden abstützt und mittels einer Anhängeöse 112 an eine nicht gezeigte automatisch schließende Anhängekupplung an der Erntemaschine angehängt werden kann. Auf dem Rahmen 108 sind nicht gezeigte, aber hinlänglich bekannte Mittel zur lagesicheren Aufnahme des Erntebergungsvorsatzes 12 auf dem Transportwagen 14 vorgesehen.

Das Energiesystem dieses Transportwagens 14 enthält im wesentlichen einen Sonnenkollektor 114, einen Akkumulator 116, einen funkgesteuerten Verteiler 118, eine Beleuchtung 120 und diverse nicht näher beschriebene Leitungen.

Der Sonnenkollektor 114 ist in dem vorderen und als Deichsel ausgebildeten Bereich des Rahmens 108 derart angeordnet, daß die zu bestrahlende Fläche nach oben zeigt. Die zu bestrahlende Fläche muß so groß sein, daß die in Strom umgewandelte und dem Akkumulator 116 zugeführte Energie auch für längere Fahrten der Erntemaschine bei Nacht ausreicht. Erforderlichenfalls kann über dem Sonnenkollektor 114 ein Gitter vorgesehen werden, das diesen vor Beschädigungen schützt. Sich evtl. auf dem Sonnenkollektor 114 absetzender Staub oder Spreuteile werden während der Fahrt vom Fahrtwind beseitigt. Die Verwendung eines Sonnenkollektors 114 stellt eine besonders sinnvolle Ausführungsform dar, weil die für ihn erforderlichen Betriebsbedingungen genau dann vorliegen, wenn der Erntebergungsvorsatz 12 benutzt wird und der Transportwagen 14 meist unter praller Sonne abgestellt ist.

Alternativ zu dem Sonnenkollektor 14 könnte ein Generator vorgesehen werden, der von den Rädern der Tandemachse 110 angetrieben wird und während der Fahrt ausreichend Energie umwandelt.

Der Akkumulator 116 ist zur Aufnahme der von dem Sonnenkollektor 114 oder dem Generator gelieferten Energie entsprechend ausgebildet, wobei Regler oder dergleichen Bauteile zum Schutz und ordnungsgemäßen Betrieb des Akkumulators 116 vorgesehen werden, aber nicht dargestellt sind.

Ausgangsseitig des Akkumulators 116 ist der Verteiler 118 über entsprechende Leitungen angeschlossen. Der Verteiler 118 wird ebenfalls mit Funksignalen aus einem auf der Erntemaschine befindlichen Sender bedient, um der Beleuchtung 120 je nach Bedarf Energie zuzuführen.

Die Beleuchtung 120 steht als Oberbegriff für alle Leuchten auf dem Transportwagen 14, die für die Fahrtrichtungsanzeige, Warnzwecke, Nachtbeleuchtung und dergleichen erforderlich sind.

In einer nicht gezeigten, weiteren Ausführungsform kann anstatt des Sonnenkollektors 114 und evtl. des Verteilers 118 eine Stromverbindung mit der Erntemaschine über Kontaktplatten erreicht werden, wie dies bereits für die Steuerung der Komponenten des Erntebergungsvorsatzes 12 beschrieben worden ist, wobei die Steuerung entweder durch eine entsprechende Anzahl an Kontakten, über Funk oder nach der Multiplex-Technik erfolgen kann.

Die nicht gezeigte automatische Anhängevorrichtung an der Rückseite der Erntemaschine kann mittels eines elektrischen oder hydraulischen Stellmotors oder mittels eines Bowdenzugs von der Fahrerkabine entriegelt und für den Verriegelungsvorgang vorgespannt werden.

Werden anstatt der Tandemachse 110 eine oder mehrere bewegliche Abstellstützen vorgesehen, die mittels vorzugsweise Elektromotoren in die eine oder andere oder beide Stellungen bringbar sind, erfolgt deren Steuerung ebenfalls analog der Beleuchtung.

Es ist nach alledem zu erkennen, daß der Erntebergungsvorsatz 12, wie oben beschrieben, ohne direkten Eingriff einer Bedienungsperson auf den Transportwagen 14 abgelegt werden kann, der insbesondere durch die Verwendung der Tandemachse 110 nicht festgestellt werden muß, sondern gegen Kippen gesichert ist. Anschließend wird die Erntemaschine rückwärts an den Transportwagen 14 herangefahren, so daß die Anhängeöse 112 in die automatische Anhängevorrichtung gelangt und dort den automatischen Schließmechanismus betätigt. Derartige automatische Anhängevorrichtungen sind hinlänglich bekannt und können zur leichteren Aufnahme der Anhängeöse 112 mit Gleit- und Leitflächen versehen werden.

Wird der Verteiler 118 auf dem Transportwagen 14 funkgesteuert, kann die Erntemaschine unverzüglich mit dem Transportwagen 14 wegfahren und die entsprechenden Komponenten der Beleuchtung von der Fahrerkabine aus steuern. Sind an der Schnittstelle zwischen der Erntemaschine und dem Transportwagen 14 im Bereich der Anhängekupplung Kontaktplatten für die Übertragung elektrischer Energie und/oder Signale vorgesehen, . stellen diese ebenfalls eine unmittelbare Verbindung her, die es erlauben, die Fahrt mit der Erntemaschine und dem Transportwagen unmittelbar aufzunehmen. Die Kontaktplatten können erforderlichenfalls beweglich und unter Federkraft aneinander angelegt werden.

Zur besseren Einfädelung der Anhängeöse 112 in die Anhängevorrichtung kann neben den Leit- und Gleitplatten an letzterer eine Ortungs- oder Anzeigevorrichtung zur Angabe der relativen Stellung der Erntemaschine zu dem Transportwagen während eines Ankuppelvorgangs vorgesehen werden. Diese Vorrichtung kann eine Kamera und einen Bildschirm auf der Fahrerplattform, einen akustischen Signalgeber, Spiegel oder dergleichen enthalten.

Soweit die Steuerung mit Funk beschrieben ist, gilt diese selbstverständlich für alle Arten der drahtlosen Signalübermittlung, also mit akustischen wie auch optischen und sonstigen Strahlen bzw. Wellen.

## Patentansprüche

1. Kombination aus einer Erntemaschine, einem demontierbaren Erntebergungsvorsatz (12) und einem Transportwagen (14), wobei der Erntebergungsvorsatz (12) wenigstens ein Hydraulikmittel (58, 60, 62, 64, 68), antreibbare Wellen (90, 98), einen in sich geschlossenen und auf die Hydraulikmittel (58, 60, 62, 64, 68) sowie die antreibbaren Wellen (90, 98) wirkenden Hydraulikkreislauf (56) mit elektrisch steuerbaren Ventilen (72 - 82) und eine Hydraulikpumpe (30) enthält, die über eine Schnellkuppelverbindung mit einem Antrieb der Erntemaschine verbindbar ist, dadurch gekennzeichnet, daß die Ventile (72-82) funksteuerbare Elektromagneten (86) aufweisen.

2. Kombination nach Anspruch 1, dadurch gekennzeichnet, daß die Schnellkuppelverbindung sowohl eine Verbindung mit der Hydraulikpumpe (30) als auch mit einem mechanischen Getriebe (66) für alle oder einige Wellen (90, 98) herstellt.

3. Kombination nach Anspruch 2, dadurch gekennzeichnet, daß die Schnellkuppelverbindung ein Umschlingungsgetriebe (20) enthält, dessen eines Trum an ein Antriebsrad (34) der Erntemaschine anlegbar ist.

4. Kombination nach einem oder mehreren der vorherigen Ansprüche, dadurch gekennzeichnet, daß zwischen der Erntemaschine und dem Erntebergungsvorsatz (12) eine fernsteuerbare ver- bzw. entriegelnde Haltevorrichtung (38) vorgesehen ist.

5. Kombination nach Anspruch 4, dadurch gekennzeichnet, daß die Haltevorrichtung (38) unter Federwirkung einrückt und mittels eines fremdkraftbetätigten Motors (46) ausgerückt wird.

6. Kombination nach einem oder mehreren der vorherigen Ansprüche, gekennzeichnet durch einen Akkumulator (116) zum Speichern elektrischer Energie und ein in sich geschlossenes, elektrisches und drahtlos fernsteuerbares Energiesystem auf dem Transportwagen (14) zum Bedienen von Beleuchtungs- und Stellmitteln (120).

7. Kombination nach Anspruch 6, dadurch gekennzeichnet, daß der Akkumulator (116) mittels Sonnenenergie oder einen von den Rädern des Transportwagens (14) unmittelbar oder mittelbar angetriebenen Generator zu laden ist.

8. Kombination nach einem oder mehreren der vorherigen Ansprüche, gekennzeichnet durch gelenkig angebrachte Halmteiler, die mittels drahtlos fernsteuerbarer Motoren von einer Betriebs- in eine Transportstellung schwenkbar sind.

9. Kombination nach einem oder mehreren der vorherigen Ansprüche, gekennzeichnet durch eine Ortungs- oder Anzeigevorrichtung zur Angabe der relativen Stellung der Erntemaschine zu dem Transportwagen (14) während eines Ankuppelvorgangs.

10. Kombination nach einem oder mehreren der vorherigen Ansprüche, dadurch gekennzeichnet, daß der Transportwagen (14) mit einer Tandemachse (110) versehen ist.

## Claims

1. A combination of a harvesting machine, a de-mountable harvesting header (12) and a transport wagon (14), wherein the harvesting header (12) comprises at least one hydraulic means (58, 60, 62, 64, 68), drivable shafts (90, 98), a closed hydraulic circuit (56) with electrically controllable valves (72 - 82) and a hydraulic pump (30), acting on the hydraulic means (58, 60, 62, 64, 68) and the drivable shafts (90, 98), wherein the pump can be connected to a drive of the harvesting machine by a quick connector, characterized in that the valves (72-82) comprise radio controllable electromagnets (86).

2. A combination according to claim 1, characterized in that the quick connector makes a connection both to the hydraulic pump (30) and to a mechanical transmission (66) for all or some shafts (90, 98).

3. A combination according to claim 2, characterized in that the quick connector includes a belt type transmission (20) of which one run can be applied to a drive wheel (34) of the harvesting machine.

4. A combination according to one or more of the preceding claims, characterized in that a retaining device (38) with remote controlled locking and unlocking is provided between the harvesting machine and the harvesting header (12).

5. A combination according to claim 4, characterized in that the retaining device (38) engages under spring action and is disengaged by means of a motor (46) actuated by outside power.

6. A combination according to one or more of the preceding claims, characterized by an accumulator (116) for storing electrical power and a closed power system on the transport wagon (14), which can be remote controlled electrically wireless for operating the lighting and control means (120).

7. A combination according to claim 6, characterized in that the accumulator (116) is charged by means of solar power or a generator driven directly or indirectly from the wheels of the transport wagon (14).

8. A combination according to one or more of the preceding claims, characterized by hinge fitted stalk dividers which can be turned by means of motors controllable by wireless from an operating position into a transport position.

9. A combination according to one or more of the preceding claims, characterized by a position finder or indicating device for indicating the position of the harvesting machine relative to the transport wagon (14) during a coupling-up operation.

10. A combination according to one or more of the preceding claims, characterized in that the transport wagon (14) is provided with a tandem axle (110).

## Revendications

1. Ensemble combiné constitué par une moissonneuse, un outil rapporté démontable (12) de ramassage de la récolte et un chariot de transport (14), et dans lequel l'outil rapporté (12) de ramassage de la récolte comporte au moins un moyen hydraulique (58,60,62,64,68), des arbres (90,98) pouvant être entraînés, un circuit hydraulique (56) fermé sur lui-même et qui agit sur les moyens hydrauliques (58,60,62,64,68) ainsi que sur les arbres (90,98) pouvant être entraînés et comporte des soupapes commandables électriquement (72-82) et une pompe hydraulique (30), qui peut être reliée par l'intermédiaire d'une liaison d'accouplement rapide à un dispositif d'entraînement de la moissonneuse, caractérisé en ce que les soupapes (72-82) possèdent des électroaimants radiocommandables (86).

2. Ensemble combiné selon la revendication 1, caractérisé en ce que la liaison d'accouplement rapide établit aussi bien une liaison avec la pompe hydraulique (30) qu'avec une transmission mécanique (66) pour tous les arbres ou pour quelques arbres (90,98).

3. Ensemble combiné selon la revendication 2, caractérisé en ce que la liaison d'accouplement rapide contient une transmission à enroulement (20), dont un brin peut être appliqué sur une roue motrice (34) de la moissonneuse.

4. Ensemble combiné selon une ou plusieurs des revendications précédentes, caractérisé en ce qu'un dispositif de retenue (38) télécommandable, qui peut être verrouillé et déverrouillé, est prévu entre la moissonneuse et l'outil rapporté (12) de ramassage de la récolte.

5. Ensemble combiné selon la revendication 4, caractérisé en ce que le dispositif de retenue (38) s'enclenche sous l'action d'un ressort et est désenclenché au moyen d'un moteur (46) actionné par une force extérieure.

6. Ensemble combiné selon une ou plusieurs des revendications précédentes, caractérisé par un accumulateur (116) servant à accumuler un énergie électrique, et un système d'énergie électrique, fermé sur lui-même et télécommandable sans fil, installé sur le chariot de transport (14) pour la commande de moyens d'éclairement et de réglage (120).

7. Ensemble combiné selon la revendication 6, caractérisé en ce que l'accumulateur (116) peut être chargé au moyen d'une énergie solaire ou au moyen d'un générateur entraîné directement ou indirectement par les roues du chariot de transport (14).

8. Ensemble combiné selon une ou plusieurs des revendications précédentes, caractérisé en ce qu'il comporte des déchaumeurs, montés d'une manière articulée et qui peuvent pivoter d'une position de fonctionnement dans une position de transport sous l'action de moteurs télécommandables sans fil.

9. Ensemble combiné selon une ou plusieurs des revendications précédentes, caractérisé par un dispositif de localisation ou d'affichage servant à indiquer la position relative de la moissonneuse par rapport au chariot de transport (14) pendant un processus d'attelage.

10. Ensemble combiné selon une ou plusieurs des revendications précédentes, caractérisé en ce que le chariot de transport (14) est pourvu d'un essieu tandem (110).
